# EUROPEAN PATENT APPLICATION

(11) **EP 3 604 849 A1**
(43) Date of publication of application: **05.02.2020**
(21) Application number: 18770451.5
(22) Date of filing: 14.03.2018
(51) Int. Cl.: F16D 65/12, B61H 5/00

(54) **BRAKE DISC FOR RAILWAY VEHICLE**

(30) Priority: 24.03.2017 JP 2017058310
(71) Applicant: Nippon Steel Corporation, Tokyo 1008071 (JP)
(72) Inventor: SHIRAISHI, Nobuo, Tokyo 151-8578 (JP); WAKABAYASHI, Yusuke, Tokyo 151-8578 (JP); KURITA, Takeshi, Tokyo 151-8578 (JP); SAKAGUCHI, Atsushi, Tokyo 100-8071 (JP); FUJIMOTO, Takahiro, Tokyo 100-8071 (JP); NOGAMI, Hiroshi, Tokyo 100-8071 (JP); KATO, Takanori, Tokyo 100-8071 (JP); ICHIKAWA, Yuki, Tokyo 100-8071 (JP)
(74) Representative: Zimmermann & Partner Patentanwälte mbB
(86) International application number: PCT/JP2018/009870
(87) International publication number: WO 2018/173869

(57) **Abstract**

This brake disc 10 is equipped with a disc plate part 10a on the front surface of which is a sliding portion, and through-holes 12, which run from the front surface to the back surface of the disc plate part, and through which bolts for fastening the disc plate part and the wheels of a railway vehicle pass. Slanted surfaces, which broaden more in the circumferential direction of the disc plate part than the radial direction of the disc plate part, are provided at the edge of the opening of the through-holes on the front-surface side of the disc plate part.

## Description

### TECHNICAL FIELD

The present invention relates to a brake disc for a railway vehicle that is fastened to a wheel of the railway vehicle and generates a braking force when a sliding contact member is pressed against the brake disc.

### BACKGROUND ART

There has been a brake system in which a brake disc is fastened to a wheel of a railway vehicle and generates a braking force of the wheel when a sliding contact member is pressed against the brake disc. It has been known that a relatively large noise is generated around a brake disc when a railway vehicle is running.

As for techniques related to the present invention, Patent Document 1 discloses a technique of reducing the noise from a brake disc when a railway vehicle is running. To reduce the noise, the technique of Patent Document 1 involves selecting the opening area of a cooling air channel formed on the back surface of a brake disc so as to regulate the amount of air flowing through the channel.

### CITATION LIST

### Patent Literature

Patent Document 1: JP 2007-205428A

### SUMMARY OF INVENTION

### Technical Problem

The brake disc of Patent Document 1 can reduce noise at the cooling air channel formed on the back surface thereof. However, even with the brake disc of Patent Document 1, the noise around the brake disc has been still large. Accordingly, it is currently desired to further reduce the noise generated around a brake disc.

An experiment conducted by the present inventors revealed that one of the noise sources is openings of through holes that are formed in the surface of a brake disc to insert bolts. The through holes are formed for fastening the brake disc to a wheel of a railway vehicle.

The openings of the through holes to which the bolts are inserted are in the front surface of the brake disc against which a sliding contact member is pressed. This causes a problem that changing the size or shape of the openings affects the braking characteristics of the brake disc since the contact area between the brake disc and the sliding contact member is changed accordingly.

It is an object of the present invention to provide a brake disc that can reduce the noise caused by a through hole for a bolt while preventing degradation of the braking performance.

### Solution to Problem

In order to achieve the above-described object, the present invention is a brake disc for a railway vehicle that includes:
a disc plate portion with a sliding portion in a surface; and
a through hole that penetrates the disc plate portion from a front surface to a back surface of the disc plate portion, in which a bolt for fastening the disc plate portion to a wheel of the railway vehicle is inserted,
wherein an inclined surface is formed at an edge of an opening of the through hole at a front side of the disc plate portion, and the inclined surface extends larger in a circumferential direction of the disc plate portion than in a radial direction of the disc plate portion.

With this configuration, the inclined surface formed at the edge of the opening of the through hole can suppress disturbance of airflow that is caused at the opening of the through hole when the brake disc is rotating, and can thereby reduce noise generated at the opening. In general, an edge of an opening is more likely to cause disturbance of airflow to generate noise in the parts perpendicular to the rotating direction of a brake disc while the edge is less likely to cause disturbance of airflow to generate noise in the parts parallel to the rotating direction. Accordingly, it is possible to effectively reduce the noise without unnecessarily decreasing the contact area between the disc plate portion and the sliding contact member by forming the inclined surface that extends more in the circumferential direction of the disc plate portion than in the radial direction of the disc plate portion.

It is preferred that a part of the inclined surface that is in the circumferential direction of the disc plate portion as seen from a center of the opening is a filleted or chamfered surface having a size of from 4 mm to 24 mm.

This inclined surface can remarkably reduce noise that is generated at the opening.

It is more preferred that a part of the inclined surface that is in the circumferential direction of the disc plate portion as seen from a center of the opening is a filleted or chamfered surface having a size of 6 mm ±15%.

This inclined surface can remarkably reduce noise that is generated at the opening.

Furthermore, it is preferred that a part of the opening that is in a radial direction of the disc plate portion as seen from a center of the opening has no inclined surface or has a filleted or chamfered surface having a size of 2 mm or less.

This inclined surface can efficiently reduce noise without unnecessarily decreasing the contact area between the disc plate portion and the sliding contact member.

### Advantageous Effects of Invention

With the present invention, it is possible to provide a brake disc that can reduce noise generated at an opening of a through hole for a bolt while avoiding degradation of the braking performance.

### BRIEF DESCRIPTION OF DRAWINGS

FIG. 1 is a perspective view of an example brake system of a railway vehicle.
FIG. 2 is a plan view of the front side of a brake disc according to an embodiment.
FIG. 3A is a plan view of a first example of a through hole to which a bolt is inserted;
FIG. 3B illustrates the first example of the through hole to which a bolt is inserted, which is a cross-sectional view taken along the line A-A in FIG. 3A.
FIG. 3C illustrates the first example of the through hole to which a bolt is inserted, which is a cross-sectional view taken along the line B-B in FIG. 3A.
FIG. 3D illustrates the first example of the through hole to which a bolt is inserted, which is a cross-sectional view taken along the line C-C in FIG. 3A.
FIG. 4A is a plan view of a second example of the through hole to which the bolt is inserted.
FIG. 4B illustrates the second example of the through hole to which a bolt is inserted, which is a cross-sectional view taken along the line A-A in FIG. 4A.
FIG. 4C illustrates the second example of the through hole to which a bolt is inserted, which is a cross-sectional view taken along the line B-B in FIG. 4A.
FIG. 4D illustrates the second example of the through hole to which a bolt is inserted, which is a cross-sectional view taken along the line C-C in FIG. 4A.
FIG. 5A is a plan view of a third example of the through hole to which a bolt is inserted.
FIG. 5B is a plan view of a fourth example of the through hole to which a bolt is inserted.
FIG. 5C is a plan view of a fifth example of the through hole to which a bolt is inserted.
FIG. 5D is a plan view of a sixth example of the through hole to which a bolt is inserted.
FIG. 5E is a plan view of a seventh example of the through hole to which a bolt is inserted.
FIG. 6 is a frequency characteristic graph illustrating the result of a noise test.
FIG. 7 is a bar graph illustrating the result of the noise test.
FIG. 8 is a graph illustrating the relationship between inclined surface size and peak noise level.

### DESCRIPTION OF EMBODIMENTS

Hereinafter, an embodiment of the present invention will be described referring to the drawings.

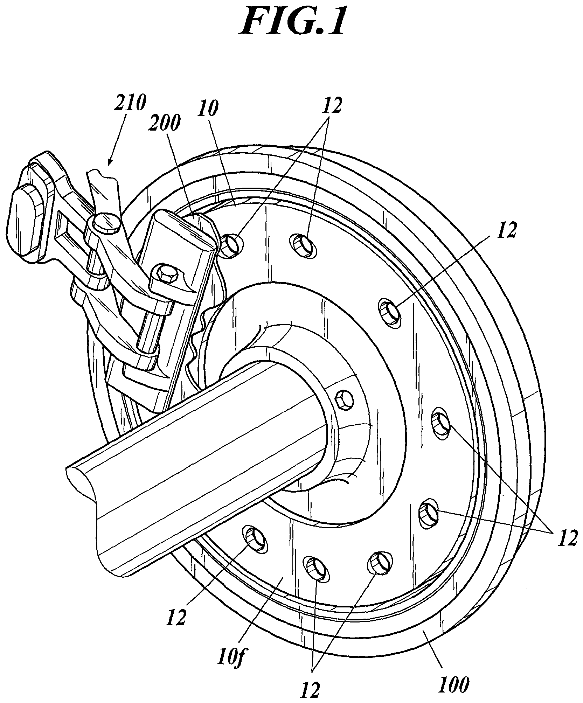

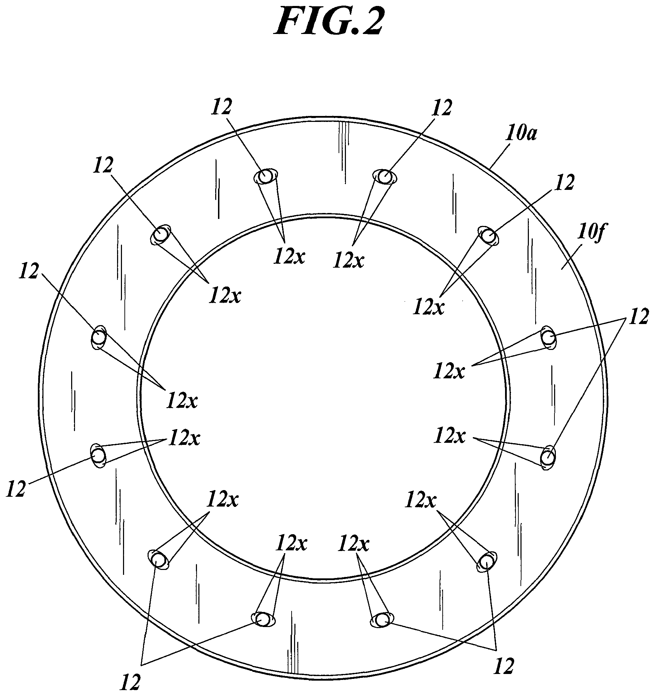

FIG. 1 is a perspective view of an example brake system of a railway vehicle. FIG. 2 is a plan view of the front side of a brake disc for a railway vehicle according to an embodiment.

The brake system according to a first embodiment of the present invention is used in a high-speed railway. The brake system includes a brake disc 10 that is fastened on a side part of a wheel 100 of the railway vehicle, a sliding contact member 200 that comes in contact with the brake disc 10 to generate a braking force, and a movable portion 210 that is capable of pressing the sliding contact member 200 against the brake disc 10. Although not particularly limited, the brake disc 10 and the sliding contact member 200 are disposed on each side of a wheel, and the movable portion 210 is configured to sandwich the wheel 100 with two sliding contact members 200.

The brake disc 10 is a ring disc, and a front surface 10f of a disc plate portion 10a serves as a sliding portion. On a back surface of the disc plate portion 10a, vertical fins and horizontal fins (not illustrated) are disposed to form a pathway for cooling air. The portion of the brake disc 10 excluding the vertical fins and the horizontal fins is referred to as the disc plate portion 10a.

The disc plate portion 10a has through holes 12 that penetrate the disc plate portion 10a from the front surface to the back surface, in which bolts are inserted. The through holes 12 are formed on the same concentric circle of the disc plate portion 10a and aligned at regular intervals in the circumferential direction of the disc plate portion 10a.

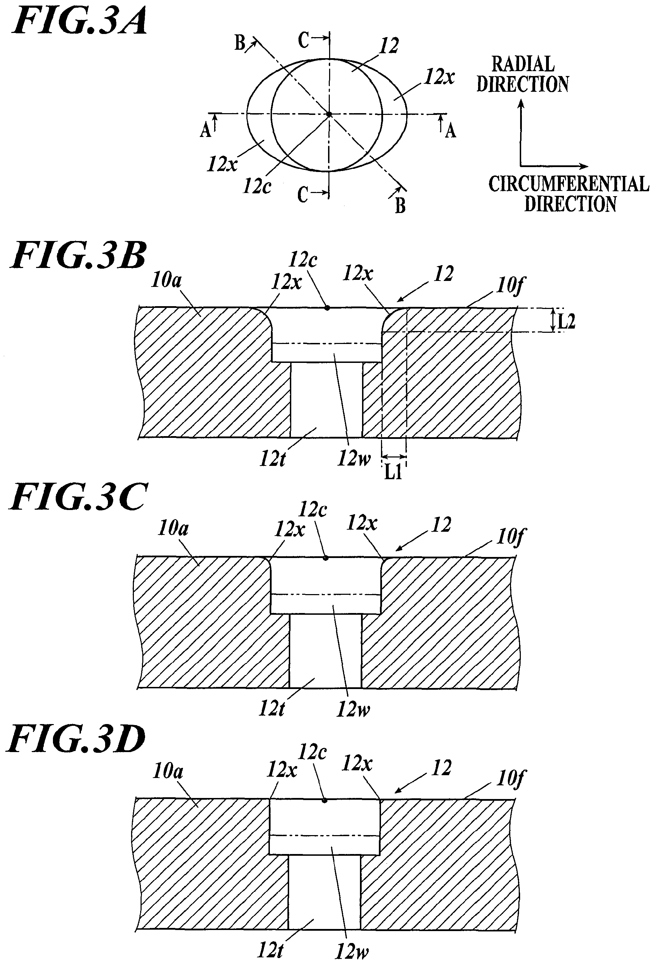

FIG. 3A is a plan view of a first example of the through holes in which the bolts are inserted, FIG. 3B is a cross-sectional view thereof taken along the line A-A, FIG. 3C is a cross-sectional view thereof taken along the line B-B, and FIG. 3D is a cross-sectional view thereof taken along the line C-C.

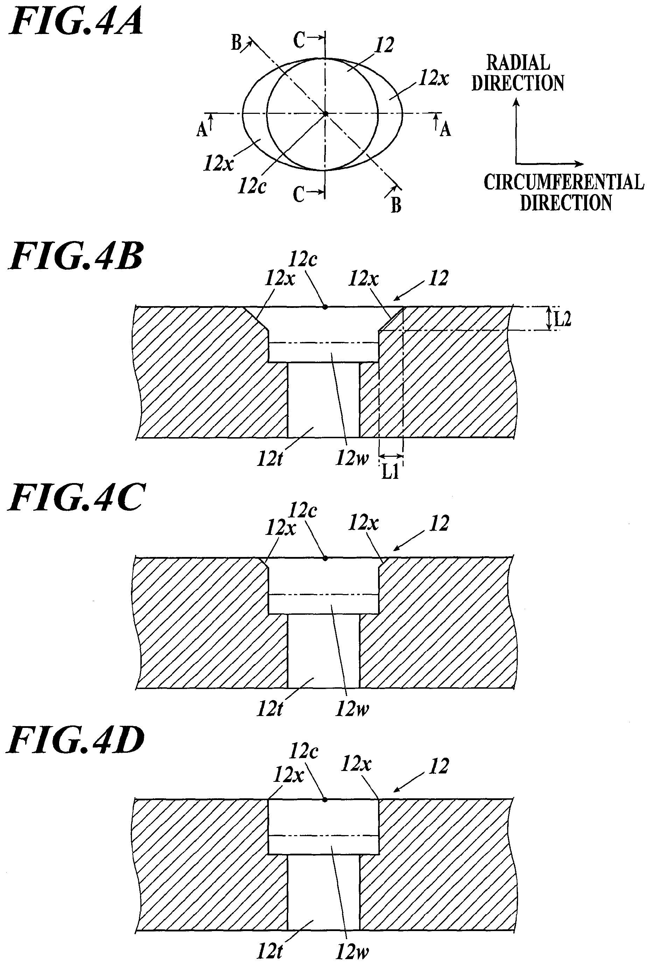

FIG. 4A is a plan view of a second example of the through holes in which bolts are inserted, FIG. 4B is a cross-sectional view thereof taken along the line A-A, FIG. 4C is a cross-sectional view thereof taken along the line B-B, and FIG. 4D is a cross-sectional view thereof taken along the line C-C.

Each of the through holes 12 includes a small-diameter portion 12t with a small diameter in which a bolt shank is inserted, and a large-diameter portion 12w with a large diameter in which a bolt head or a nut is disposed. The part where the large-diameter portion 12w intersects the front surface 10f of the disc plate portion 10a is referred to as an opening. Further, the part where the center axis of the through hole 12 intersects the front surface 10f of the disc plate portion 10a is referred to as a center 12c of the opening. In FIG. 3B, FIG. 3C, FIG. 3D, FIG. 4B, FIG. 4C and FIG. 4D, the level of the bolt head top is indicated by a dashed-two dotted line.

In the front side of the disc plate portion 10a, inclined surfaces 12x are formed at the edges of the openings of the through holes 12. The inclined surfaces 12x extend larger in the circumferential direction of the disc plate portion 10a than in the radial direction of the disc plate portion 10a. To be more specific, the inclined surfaces 12x are formed at the edges of the openings of the through holes 12, and the inclination gets closer to the direction of the center axis of the through holes 12 from the front surface 10f toward the back surface of the disc plate portion 10a. In other words, the inclined surfaces 12x that extend larger in the circumferential direction of the disc plate portion 10a than in the radial direction of the disc plate portion 10a refer to the following shape. That is, in a view in the direction of the rotation axis of the disc plate portion 10a, the parts of lines extending in the circumferential direction of the disc plate portion 10a through the centers 12c of the openings of the through holes 12 that overlap the respective inclined surfaces 12x are greater than the parts of lines extending in the radial direction of the disc plate portion 10a through the centers 12c of the openings of the through holes 12 that overlap the respective inclined surfaces 12x. In a view in the direction of the rotation axis of the disc plate portion 10a, the lines extending in the radial direction of the disc plate portion 10a through the centers 12c of the openings of the through holes 12 may not overlap the inclined surfaces 12x.

As illustrated in FIG. 3B, FIG. 3C and FIG. 3D, the inclined surfaces 12x are formed by chamfered/filleted portions that are formed at the edges of the openings of the through holes 12, which are filleted (rounded) surfaces. As illustrated in FIG. 4B, FIG. 4C and FIG. 4D, the inclined surfaces 12x may be chamfered surfaces.

The inclined surfaces 12x may be formed either by chamfering such as cutting or by molding. As used herein, even when the inclined surfaces 12x are formed by molding, such inclined surfaces 12x are also referred to as chamfered/filleted portions, chamfered surfaces or filleted surfaces. In the following, an X-mm filleted or chamfered surface means a filleted or chamfered surface that has a maximum length L1 in the plane direction of the surface 10f of the disc plate portion 10a and a maximum length L2 in the axial direction of the disc plate portion 10a of approximately X mm as illustrated in FIG. 3B and FIG. 4B.

In the first example in FIG. 3A to FIG. 3D and the second example in FIG. 4A to FIG. 4D, the inclined surfaces 12x have such a shape that is largest in the circumferential direction of the disc plate portion 10a as seen from the centers 12c of the respective openings and that continuously gets smaller toward the radial direction of the disc plate portion 10a as seen from the centers 12c of the respective openings. At the edges of the openings, no inclined surface 12x is formed in the radial direction of the disc plate portion 10a as seen from the centers 12c of the openings.

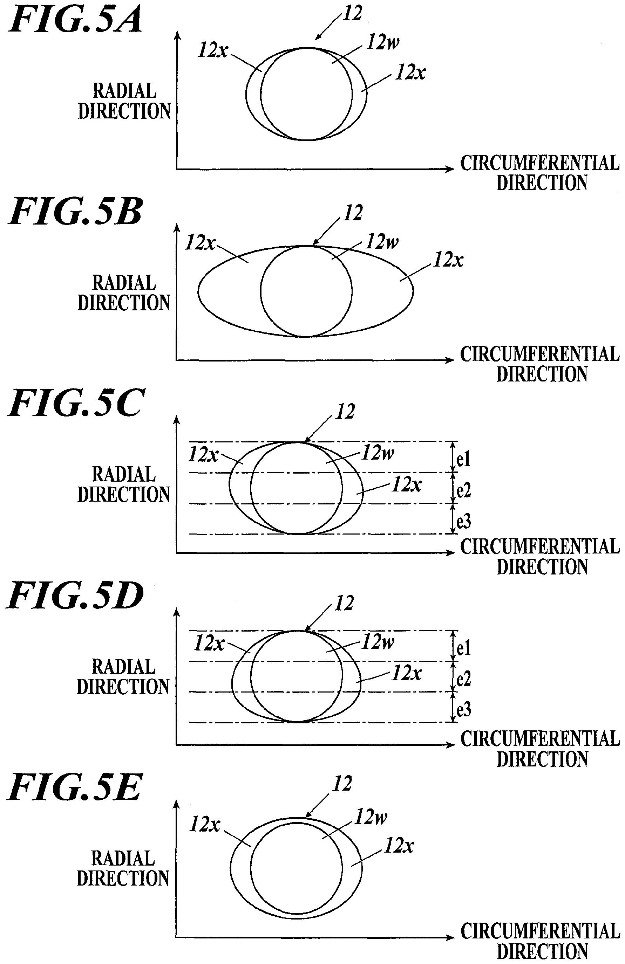

FIG. 5A to FIG. 5E are plan views of third to seventh examples of the through holes in which bolts are inserted.

The inclined surfaces 12 of the through holes 12 may have different shapes as illustrated in FIG. 5A to FIG. 5E. The diameter of the large-diameter portions 12w of the through holes 12 in FIG. 5A to FIG. 5E is 36 mm.

As illustrated in FIG. 5A, the through holes 12 of the third example have the inclined surfaces 12x that are smaller than those of the through holes 12 of the first and second examples. The largest parts of the inclined surfaces 12x of the third examples, which are 6-mm filleted or chamfered surfaces, are located in the circumferential direction of the disc plate portion 10a as seen from the centers 12c of the respective openings. In the through holes 12 of the third example, no inclined surface 12x is formed at the parts in the radial direction of the disc plate portion 10a as seen from the centers 12 of the respective openings. The inclined surfaces 12x are formed in such a shape that gets continuously smaller from the largest parts to the smallest parts.

As illustrated in FIG. 5B, the through holes 12 of the fourth example have the inclined surfaces 12x that are larger than those of the through holes 12 of the first and second examples. The largest parts of the inclined surfaces 12x of the fourth examples are 24-mm filleted or chamfered surfaces that are located in the circumferential direction of the disc plate portion 10a as seen from the centers 12c of the respective openings. In the through holes 12 of the fourth example, no inclined surface 12x is formed in the parts located in the radial direction of the disc plate portion 10a as seen from the centers 12 of the respective openings. The inclined surfaces 12x are formed in such a shape that gets continuously smaller from the largest parts to the smallest parts. The 24-mm filleted or chamfered surfaces have such a size that reaches the tops of the bolt heads.

As illustrated in FIG. 5C, the through holes 12 of the fifth example are an example in which the largest and smallest parts of the inclined surfaces 12x are shifted around the center axes of the respective openings. Except for this, the inclined surfaces 12x have the same shape as those of the first to fourth examples. Even in this example, it is preferred that the largest parts of each of the inclined surfaces 12x are located in a center area e2 among three areas e1 to e3 that evenly divide the through hole 12 in the radial direction of the disc plate portion 10a.

As illustrated in FIG. 5D, the through holes 12 of the sixth example are an example in which the symmetrical shape of the inclined surfaces 12x about a circumferential line through the centers 12c of the respective openings is deformed into an asymmetrical shape. Except for this, the inclined surfaces 12x have the same shape as those of the first to fourth examples. Even in this example, it is preferred that the largest parts of each of the inclined surfaces 12x are located in a center area e2 among three areas e1 to e3 that evenly divide the through hole 12 in the radial direction of the disc plate portion 10a.

As illustrated in FIG. 5E, the through holes 12 of the seventh example is an example in which the inclined surfaces 12x extend over the entire peripheries of the respective openings. In the seventh example, the largest parts of the inclined surfaces 12x are located in the circumferential direction of the disc plate portion 10a as seen from the centers 12c of the respective openings. Further, the smallest parts of the inclined surfaces 12x are located in the radial direction of the disc plate portion 10a as seen from the centers 12c of the respective openings. It is preferred that the inclined surfaces 12x are formed in such a shape that gets continuously smaller from the largest parts to the smallest parts, and the smallest parts of the inclined surfaces 12x are filleted or chamfered surfaces of 2 mm or less. The inclined surfaces 12x in the seventh example may be further deformed as in the fifth or sixth example.

The through holes 12 of the above-described first to seventh examples have the inclined surfaces 12x at the edges of the respective openings, and the inclined surfaces 12x extend larger in the circumferential direction of the disc plate portion 10a than in the radial direction of the disc plate portion 10a. This configuration can reduce disturbance of airflow at the openings of the through holes 12 and thereby reduce noise that is generated at the openings. In general, the edges of the openings are more likely to cause disturbance of airflow to generate noise at the parts perpendicular to the rotating direction of the brake disc 10 while the edges are less likely to cause disturbance of airflow to generate noise at the parts parallel to the rotating direction. Any of the above-described shapes of the inclined surfaces 12x can efficiently reduce noise without unnecessarily reducing the contact area between the disc plate portion 10a and the sliding contact member. Therefore, it is possible to reduce noise that is generated from the brake discs 10 when the railway vehicle is running while avoiding degradation of the braking performance of the brake discs 10.

### (Noise Reducing Effect)

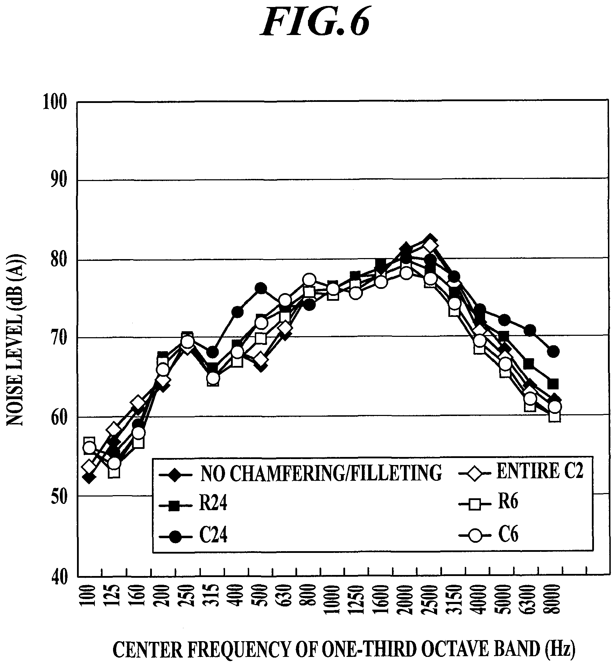

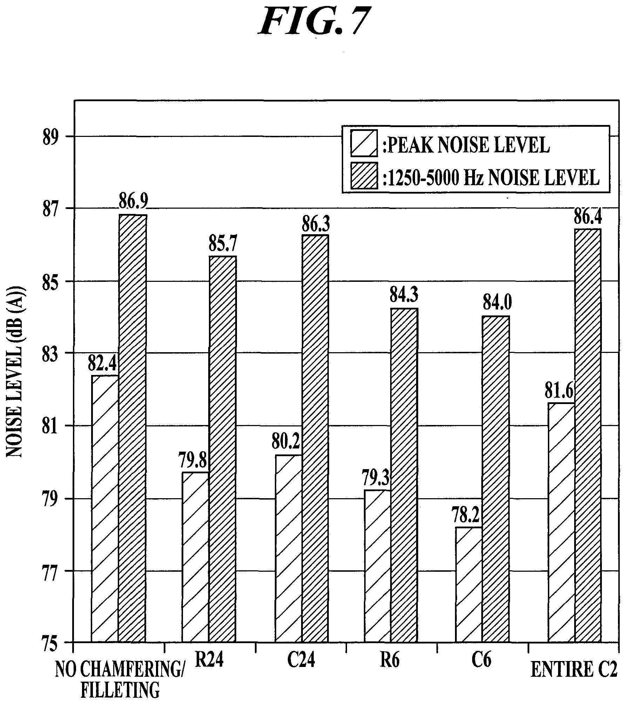

FIG. 6 is a frequency characteristic graph illustrating the result of a noise test. FIG. 7 is a bar graph illustrating the result of the noise test. The graphs show the level of noise when different types of brake discs 10 with different shapes of the openings of the through holes 12 are rotated. "R24" represents the configuration with the inclined surfaces 12x in FIG. 5B, which are filleted surfaces with the 24-mm largest parts formed at the openings of the through holes 12. "C24" represents the configuration with the inclined surfaces 12x in FIG. 5B, which are chamfered surfaces with the 24-mm largest parts. "R6" represents the configuration with the inclined surfaces 12x in FIG. 5A, which are filleted surfaces with the 6-mm largest parts. "C6" represents the configuration with the inclined surfaces 12x in FIG. 5A, which are chamfered surfaces with the 6-mm largest parts. "No chamfering/filleting" represents the configuration with no inclination at the front-side openings of the through holes 12, and "entire C2" represents the configuration with 2-mm filleted surfaces that are formed over the entire edges of the front-side openings of the through holes 12. The vertical axis of FIG. 6 is noise level at different frequency bands, and the horizontal axis of FIG. 6 is center frequency of one-third octave-bands. FIG. 7 shows peak noise levels and overall noise levels within the major frequency range (1250 Hz to 5000 Hz) of noise caused by the through holes.

As illustrated in FIG. 6, it was observed that the brake discs 10 with the R24 or C24 inclined surfaces 12x according to the present embodiment exhibited a remarkably reduced noise level around 2500 Hz compared to the brake discs without chamfering/filleting or with the entire C2. Similarly, it was observed that the brake discs 10 with the R6 or C6 inclined surfaces 12x according to the present embodiment exhibited a more remarkably reduced noise level around 2500 Hz.

As illustrated in FIG. 7, it was observed that the brake discs 10 with the R24 or C24 inclined surfaces 12x according to the present embodiment exhibited a remarkably reduced peak noise level compared to the brake discs without chamfering/filleting or with the entire C2. Further, it was observed that the brake discs 10 with the R6 or C6 inclined surfaces 12x according to the present embodiment exhibited a remarkably reduced peak noise level and remarkably reduced noise levels within the major frequency range of noise caused by the through holes compared to the brake discs without chamfering/filleting or with entire C2.

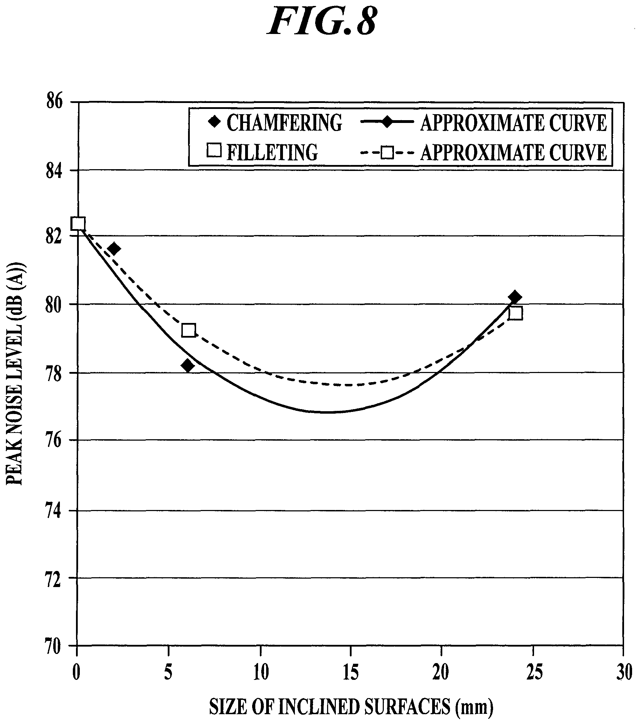

FIG. 8 is a graph illustrating the relationship between size of the inclined surfaces and peak noise level.

The graph suggests that the noise generated at the openings of the through holes 12 is dominantly generated at the parts of the edges of the openings that are perpendicular to the rotating direction of the brake disc 10. Accordingly, the size of the inclined surfaces 12 in these parts seems to be correlated to the noise level. The size of the inclined surfaces at these parts is zero in the "no chamfering" configuration, 2 mm in the "entire C2" configuration, 6 mm in the "R6" or "C6" configuration, and 24 mm in the "R24" or "C24" configuration.

Based on the above-described consideration, an approximate curve as illustrated in FIG. 8 is determined by calculating the correlation between the size of the inclined surfaces 12x and the peak noise level. The approximate curve indicates that the inclined surfaces having a size of from 4 mm to 24 mm remarkably reduce the peak noise level. The approximate curve further indicate that the inclined surfaces having a size of from 5 mm to 20 mm reduce the peak noise level more remarkably.

In the foregoing, an embodiment of the present invention is described. However, the present invention is not limited to the above-described embodiment. For example, the above-described embodiment illustrates an example in which the inclined surfaces 12x are filleted or chamfered surfaces with equal length L1 and length L2 as illustrated in FIG. 3B and FIG. 4B. However, the inclined surfaces 12x may have a longer L1 and a shorter L2 or have a shorter L1 and a longer L2. Further, suitable changes can be made in the details described in the embodiment without departing from the features of the present invention.

### INDUSTRIAL APPLICABILITY

The present invention is applicable to brake discs for railway vehicles.

### REFERENCE SIGNS LIST

- 10: Brake disc
- 10a: Disc plate portion
- 10f: Front surface
- 12: Through hole
- 12t: Small-diameter portion
- 12w: Large-diameter portion
- 12x: Inclined surface
- 12c: Center of opening

## Claims

1. A brake disc for a railway vehicle, comprising:
a disc plate portion with a sliding portion in a surface; and
a through hole that penetrates the disc plate portion from a front surface to a back surface of the disc plate portion, in which a bolt for fastening the disc plate portion to a wheel of the railway vehicle is inserted,
wherein an inclined surface is formed at an edge of an opening of the through hole at a front side of the disc plate portion, and the inclined surface extends larger in a circumferential direction of the disc plate portion than in a radial direction of the disc plate portion.

2. The brake disc for the railway vehicle according to claim 1, wherein a part of the inclined surface that is in the circumferential direction of the disc plate portion as seen from a center of the opening is a filleted or chamfered surface having a size of from 4 mm to 24 mm.

3. The brake disc for the railway vehicle according to claim 1, wherein a part of the inclined surface that is in the circumferential direction of the disc plate portion as seen from a center of the opening is a filleted or chamfered surface having a size of 6 mm ±15%.

4. The brake disc for the railway vehicle according to any one of claims 1 to 3, wherein a part of the opening that is in a radial direction of the disc plate portion as seen from a center of the opening has no inclined surface or has a filleted or chamfered surface having a size of 2 mm or less.
